# EUROPÄISCHE PATENTSCHRIFT

(11) **EP 3 117 950 B1**
(45) Veröffentlichungstag und Bekanntmachung des Hinweises auf die Patenterteilung: **04.11.2020**
(21) Anmeldenummer: 16179614.9
(22) Anmeldetag: 15.07.2016
(51) Int. Cl.: B23K 26/067, B23K 26/073, B23K 26/06, G02B 27/09

(54) **OPTISCHE EINRICHTUNG ZUR UMFORMUNG VON LASERSTRAHLUNG**
OPTICAL DEVICE FOR SHAPING LASER RADIATION
DISPOSITIF OPTIQUE DESTINE A DEFORMER UN RAYONNEMENT LASER

(30) Priorität: 15.07.2015 DE 102015111475; 30.07.2015 DE 102015112537
(43) Veröffentlichungstag der Anmeldung: 18.01.2017
(73) Patentinhaber: Laserline Gesellschaft für Entwicklung und Vertrieb von Diodenlasern mbH, 56218 Mülheim-Kärlich (DE)
(72) Erfinder: Baumann, Markus, 56218 Mülheim Kärlich (DE); Luft, Axel, 56332 Dieblich (DE)
(74) Vertreter: Glück Kritzenberger Patentanwälte PartGmbB

(56) Entgegenhaltungen:
- EP-A1- 2 641 688
- US-A1- 2006 209 310

## Beschreibung

Die Erfindung bezieht sich auf eine optische Einrichtung zur Umformung von Laserstrahlung gemäß dem Oberbegriff des Patentanspruches 1 (siehe, zum Beispiel, US 2006/0209310 A1).

Lasereinheiten, insbesondere Hochleistungs-Diodenlasereinheiten werden im Bereich der industriellen Materialbearbeitung, beispielsweise zum Schneiden, Schweißen oder Hartlöten von Karosseriebauteilen im Automobilbereich eingesetzt. Der Aufbau und die Funktionsweise derartiger Lasereinheiten, insbesondere Hochleistungs-Diodenlasereinheiten ist prinzipiell bekannt.

Insbesondere das Laserstrahlschweißen und Laserhartlöten mittels Lasereinheiten gewinnen zunehmend an Bedeutung und werden vor allem zum Verschweißen oder Hartlöten von Werkstücken eingesetzt, die mit hoher Geschwindigkeit, mit schmaler Fügenahten und mit geringem thermischen Verzug zu fügen sind. Der zum Schweißen bzw. Löten erforderliche Energieeintrag erfolgt einen Laserstrahl, der über ein Lichtleitkabel an das Werkstück geführt und dort im Fügebereich ein so genannter Laserspot bzw. Laserpunkt erzeugt wird. Beispielsweise beim Schweißen oder Hartlöten von verzinkten Karosseriebauteilen erfolgt durch den Energieeintrag gleichzeitig ein Verdampfen der Zinkbeschichtung und das Fügen der Werkstücke. Nachteilig kann hierdurch bei Werkstücken mit Zinkschichten hoher Schichtdicke und/oder bei Schwankungen der Schichtdicke des Werkstückes ein unruhiger Fügeprozess entstehen, der insbesondere zu so genannten Mikrospritzern führt.

Auch können derartige Lasereinheiten zum Aluminiumschweißen mit Zusatzdraht eingesetzt werden. Hier ist eine saubere oder vorbehandelte Oberfläche der Fügepartner zwingend erforderlich, um einen stabilen und ruhigen Fügeprozess zu erreichen. Beim Fügen mittels eines einzelnen Laserstrahls erfolgt das Schweißen und Verdampfen von ggf. vorhandenen Verunreinigungen gleichzeitig an der Stelle des Energieeintrags über den Laserstrahl. Nachteilig führt dies ebenfalls zu einem unruhigen Fügeprozessverlauf mit Auswürfen und gesteigerter Porenbildung.

Beim Schneiden oder Schweißen von hochfesten Stählen mittels Laserstrahlung entsteht eine Aushärtung an der Schnittkante, die nachteilig zu Mikrorissen und unerwünschtem Härten in der Wärmeinflusszone führt.

Aus der US 2006/0209310 A1 ist ein optisches System zur Erzeugung eines linienförmigen Laserspots mit vorgegebener Intensitätsverteilung aus einem Lichtstrahl bekannt, bei dem mindestens ein erstes und zweites Zylinderlinsenarray im Strahlengang (z- Richtung) hintereinander angeordnet sind, welche einen einfallenden Strahl in mehrere Teilstrahlen aufteilen. Aufgrund der parallelen Anordnung der Zylinderlinsen der Zylinderlinsenarrays und einer nachgeschalteten Fokussieroptik entsteht in einer senkrecht zum Strahlengang verlaufenden Bearbeitungsebene ein linienförmiger Laserspot (y-Richtung), der einen sich senkrecht (x-Richtung) hierzu erstreckenden Abbildungsfehler ("Smile") aufweist. Zur Korrektur dieses Fehlers sind zwischen dem ersten und zweiten Zylinderlinsenarray optische Bauelemente im Strahlengang angeordnet, wobei ein optisches Bauelement jeweils einer Zylinderlinse vorgeschaltet ist. Die Korrektur erfolgt durch linsenspezifisches Schrägstellen der optischen Bauelemente bezogen auf die Propagationsachse.

Ausgehend hiervon liegt der Erfindung die Aufgabe zugrunde, eine optische Einrichtung zur Umformung von Laserstrahlung bereitzustellen, durch welche die eingangs beschriebenen Nachteile der unterschiedlichen Fügeprozesse vermieden werden können, insbesondere ein stabiler und ruhiger Prozessverlauf bei einer reduzierten Fehlerquote erreicht wird. Die Aufgabe wird erfindungsgemäß durch eine optische Einrichtung zur Umformung von Laserstrahlung gemäß dem Patentanspruch 1 gelöst.

Vorteilhafte Weiterbildungen, Details und Ausgestaltungen der Erfindung ergeben sich aus den abhängigen Ansprüchen, der Beschreibung sowie den Zeichnungen.

Der wesentliche Aspekt der erfindungsgemäßen optischen Einrichtung zur Umformung von Laserstrahlung bzw. Strahlumformeinrichtung ist darin zu sehen, dass das strahlformende Optikmodul zur Erzeugung einer Fokusgeometrie in einer Bearbeitungsebene mit einem Hauptlaserspot und zumindest einem Nebenlaserspot ausgebildet ist, wobei das strahlformende Optikmodul nach der Kollimationslinse einer Bearbeitungsoptik eingesetzt wird. Der Hauptlaserspot weist eine quadratische oder rechteckige Form auf und der zumindest eine Nebenlaserspot ist kreisförmig, quadratisch oder rechteckförmig ausgebildet und das strahlformende Optikmodul weist zumindest ein erstes Zylinderlinsenarray sowie ein zweites Zylinderlinsenarray und eine Keilplattenanordnung auf, wobei das erste und zweite Zylinderlinsenarray und die Keilplattenanordnung zur Ausbildung des Moduls mechanisch miteinander verbunden sind und das Modul entlang einer senkrecht zur Propagationsachse verlaufenden Quer- und Vertikalachse verstellbar in der optischen Einrichtung gelagert ist. Ferner weist das erste und zweite Zylinderlinsenarray jeweils eine Vielzahl von in einer Ebene parallel zueinander angeordnete, längliche Zylinderlinsen auf und das erste und zweite Zylinderlinsenarray sind hintereinander entlang der Propagationsachse, beabstandet und gekreuzt zueinander angeordnet, wobei die zueinander gekreuzten Zylinderlinsenarrays zur Erzeugung der Hauptlaserstrahlung ausgebildet sind. Die Keilplattenanordnung ist zwischen dem ersten und zweiten Zylinderlinsenarray aufgenommen und zur Erzeugung der zumindest einen Nebenlaserstrahlung ausgebildet. Schließlich ist dem strahlformenden Optikmodul in Richtung der Propagationsachse eine Fokussieroptik nachgeordnet, die zur Abbildung der Hauptlaserstrahlung in den Hauptlaserspot und der zumindest einen Nebenlaserstrahlung in den zumindest einen Nebenlaserspot in der Bearbeitungsebene ausgebildet ist. Durch die optische Ausgestaltung des strahlformenden Optikmoduls kann die Position, Form und/oder Leistungsdichteverteilung sowie der Leistungsinhalt des erzeugten Hauptlaserspot und des zumindest einen Nebenlaserspots individuell eingestellt werden. Vorteilhaft können durch Einsatz der erfindungsgemäßen Fokusgeometrie, d.h. einem Hauptlaserspot und einen, zwei oder mehrere Nebenlaserspots, Materialbearbeitungsschritte die bisher in einem Bearbeitungsschritt durchgeführt wurden, räumlich und zeitlich voneinander getrennt werden, wodurch eine deutliche Verbesserung der Prozessqualität und Reduzierung der Fehlerrate erreicht wird. In einem kartesischen Koordinatensystem mit x- y- z-Achse entspricht hierbei die Propagationsachse der z- Achse, die Vertikalachse der y-Achse und die Querachse der x-Achse.

Durch die beschriebene Laserspotgeometrie kann beispielsweise beim Schweißen von verzinkten Blechen die Zinkschicht mittels der vorauseilenden Nebenlaserpunktes vor dem eigentlichen Füge- bzw. Schweißprozess verdampft werden, wodurch der Schweißprozess beruhigt wird und dem Entstehen von Mikrospritzern entgegengewirkt werden kann. Analog hierzu werden beim Aluminiumschweißen mit Zusatzdraht vor dem eigentlichen Fügeprozess über die vorauseilenden Nebenlaserpunkte der erzeugten Laserpunktgeometrie Verunreinigungen im Fügebereich gezielt entfernt, und dadurch die Porenbildung und das Entstehen von Auswürfen reduziert. Insbesondere wird bei Bearbeitungsprozessen mit Zusatzdraht der Abstand der vorlaufenden Nebenspots auf den Drahtdurchmesser abgestimmt. Analog hierzu sind die Form, die Leistungsdichteverteilung und der Leistungsinhalt an die jeweiligen Prozessparameter sowie die Nahgeometrie anpassbar.

Weiterhin vorteilhaft ist die Keilplattenanordnung zur Erzeugung einer ersten und zweiten Nebenlaserstrahlung und die Fokussieroptik zur Abbildung der ersten und zweiten Nebenlaserstrahlung in einen ersten und zweiten Nebenlaserspot ausgebildet.

In einer vorteilhaften Ausführungsvariante ist die optische Einrichtung zur Verwendung in einem Materialbearbeitungsprozess vorgesehen und der Hauptlaserspot weist eine an den Materialbearbeitungsprozess angepasste Leistungsdichteverteilung auf. Weiterhin vorteilhaft ist mittels des strahlformenden Optikmoduls die Leistung der Laserstrahlung auf den Hauptlaserspot und den zumindest einen Nebenlaserspot durch Verschieben des strahlformenden Optikmoduls entlang einer senkrecht zur Propagationsachse verlaufenden Vertikalachse variabel aufteilbar ist. Sind zumindest ein erster und zweiter Nebenlaserspot vorgesehen, so ist weiter vorteilhaft mittels des strahlformenden Optikmoduls die Leistungsaufteilung zwischen dem ersten und zweiten Nebenlaserspot durch Verschieben des strahlformenden Optikmoduls entlang einer senkrecht zur Propagationsachse verlaufenden Querachse variabel einstellbar. Damit ist die Leistungsaufteilung der erzeugten Fokusgeometrie individuell auf den jeweiligen Anwendungsfall anpassbar.

In einer Ausführungsvariante ist der zumindest eine Nebenlaserspot bezogen auf eine in der Bearbeitungsebene verlaufenden Vorschubachse vor- oder nachlaufend versetzt zum Hauptlaserspot angeordnet ist. In einer bevorzugten Ausführungsvariante sind der Hauptlaserspot auf der Vorschubachse und der zumindest eine Nebenlaserspot seitlich versetzt zur Vorschubachse in der Bearbeitungsebene angeordnet.

Weiterhin vorteilhaft weist der zumindest eine Nebenlaserspot in der Bearbeitungsebene einen Abstand zur Vorschubachse, eine zur Fokussierung der Laserstrahlung eingesetzte Fokussieroptik einen Arbeitsabstand zur Bearbeitungsebene und eine Kollimationsoptik einen Kollimationsabstand zum Faserende auf, wobei der Abstand durch Änderung des Arbeitsabstandes und/oder des Kollimationsabstandes einstellbar ist.

Besonders vorteilhaft kann die erfindungsgemäße optische Einrichtung, insbesondere das strahlformende Optikmodul bei bestehenden Lasereinheiten mit fasergekoppelten Laserbearbeitungsoptiken nachgerüstet werden, so dass das Standartequipment wir Laser, Faser und Optik weiter verwendet werden können.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: eine perspektivische Darstellung einer erfindungsgemäßen optischen Einrichtung,
- Fig. 2: einen Schnitt entlang der y-/z-Ebene durch die erfindungsgemäße optische Einrichtung gemäß Figur 1 und
- Fig. 3a-3i: diverse Ausführungsvarianten der erfindungsgemäßen Fokusgeometrie.

### Wege zur Ausführung der Erfindung

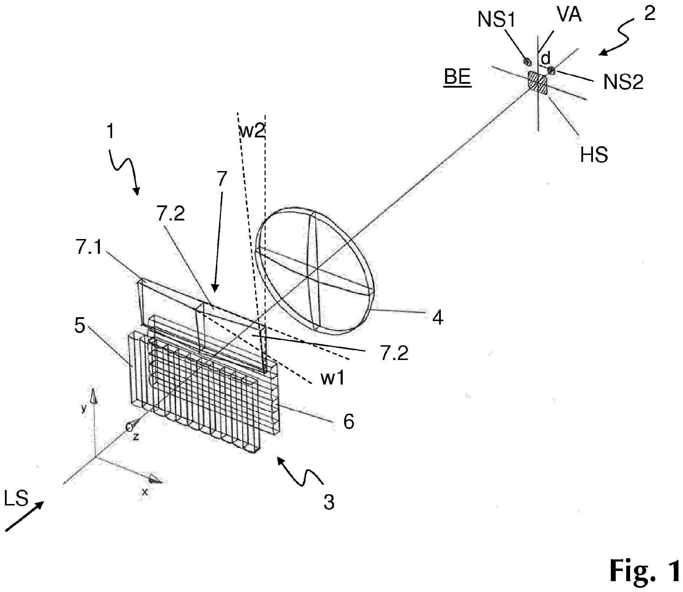

Fig. 1 zeigt eine perspektivische Darstellung einer erfindungsgemäße optische Einrichtung 1 zum Umformen einer entlang einer Propagationsachse z propagierenden Laserstrahlung LS, welche beispielsweise für Lasereinheiten mit einer fasergekoppelten Laserbearbeitungsoptik verwendet werden kann und die zur Erzeugung einer Fokusgeometrie 2 in einer Bearbeitungsebene BE ausgebildet ist.

Die Bearbeitungsebene BE stellt hierbei die Ebene dar, in welcher die Materialbearbeitung der Werkstücke, insbesondere eine Schneiden, Schweißen und/oder Hartlöten von Werkstücken durchgeführt wird.

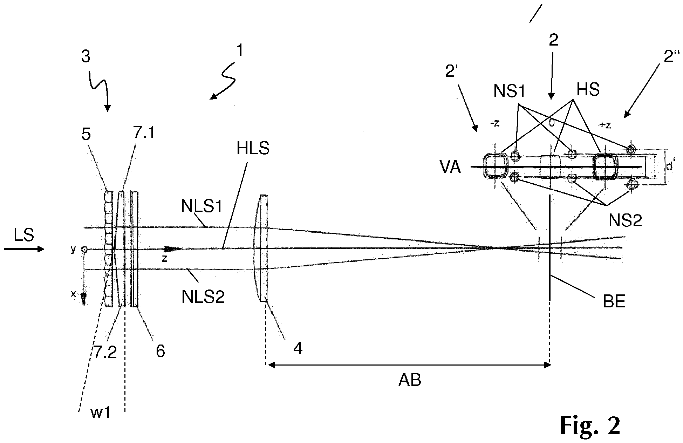

Die optische Einrichtung 1 umfasst zumindest ein strahlformendes Optikmodul 3. Die Propagationsachse z verläuft hierbei senkrecht zur Bearbeitungsebene BE und bildet die z- Achse eines zur Beschreibung des Aufbaus der optischen Einrichtung 1 bzw. des strahlformenden Optikmoduls 3 in den Figuren 1 und 2 eingeführten kartesischen Koordinatensystems mit einer x- Achse, y-Achse und z-Achse. Die durch eine nicht in den Figuren dargestellte Laserquelle wird eine Laserstrahlung LS entlang der Propagationsachse z dem strahlformenden Optikmoduls 3 zugeführt, d.h. die Propagationsrichtung der Laserstrahlung LS erstreckt sich entlang der Propagationsachse z. Die x-Achse des kartesischen Koordinatensystems werden nachfolgend als Querachse x und die y- Achse als Vertikalachse y bezeichnet. Die Querachse x und die Vertikalachse y spannen hierbei eine parallel zur Bearbeitungsebene BE verlaufende Ebene auf.

Die Einführung des kartesischen Koordinatensystems in den Figuren 1 und 2 dient zur exakten Beschreibung des Aufbaus des strahlformenden Optikmoduls 3, des Verlaufs der umgeformten Laserstrahlung LS und der in der Bearbeitungsebene BE erzeugten Fokusgeometrie 2.

Erfindungsgemäß ist das strahlformende Optikmodul 3 zur Erzeugung einer Fokusgeometrie in der Bearbeitungsebene BE mit einem Hauptlaserspot HS und zumindest einem Nebenlaserspot NS1, NS2 ausgebildet.

Mittels des strahlformenden Optikmoduls 3 wird somit die beispielsweise von der fasergekoppelten Diodenlasereinheit erzeugte Laserstrahlung LS in eine Hauptlaserstrahlung HLS und eine bzw. erste und zweiten Nebenlaserstrahlung NLS1, NLS2 umgeformt, wobei die Verteilung der Laserleistung der Laserstrahlung LS in die erzeugten Haupt- und Nebenlaserstrahlung HLS, NLS1, NLS2 durch eine entsprechende Verschiebung des strahlformenden Optikmoduls 3 in einer durch die Quer- und Vertikalachse x, y aufgespannten Ebene, die parallel zur Bearbeitungsebene BE verläuft, individuell einstellbar ist und somit vorteilhaft an die Bedürfnisse des Materialbearbeitungsprozesses angepasst werden kann. Das strahlformende Optikmodul 3 ist hierzu als Kollimationsoptik ausgebildet, d.h. das strahlformende Optikmodul 3 wird nach der Kollimationslinse einer Bearbeitungsoptik eingesetzt.

Die erfindungsgemäße optische Einrichtung 1 umfasst ferner eine in Richtung der Propagationsachse z des strahlformenden Optikmoduls 3 nachgeordnete Fokussieroptik 4, die beispielsweise in Form einer Fokussierlinse ausgebildet ist. Die Fokussieroptik 4 ist erfindungsgemäß zur Abbildung der Hauptlaserstrahlung HLS und der ersten und zweiten Nebenlaserstrahlung NLS1, NLS2 in den Hauptlaserspot HS und zumindest einen, vorzugsweise einen ersten und zweiten Nebenlaserspot NS1, NS2 in der senkrecht zur Propagationsachse z verlaufenden Bearbeitungsebene BE ausgebildet. Der zumindest eine Nebenlaserspot NS1, NS2 ist vorzugsweise entlang einer durch eine senkrechte Projektion der Vertikalachse y in die Bearbeitungsebene BE entstehenden Vorschubachse VA dem Hauptlaserspot HS vor- oder nachgeordnet ist.

Da die Vorschubachse VA der jeweiligen Vorschubrichtung einer fasergekoppelten Laserbearbeitungsoptik der Diodenlasereinheit entspricht, läuft damit der zumindest eine Nebenlaserspot NS1, NS2 dem Hauptlaserspot HS in Vorschubrichtung vor- oder nach.

Das strahlformende Optikmodul 3 ist vorzugsweise zum nachträglichen Einbau in den kollimierten Strahlengang der fasergekoppelten Laserbearbeitungsoptik eingesetzt, so dass die Fokussieroptik 4 bereits Teil der fasergekoppelten Laserbearbeitungsoptik sein kann. Das strahlformende Optikmodul 3 wird damit in die bestehende fasergekoppelte Laserbearbeitungsoptik integriert und ggf. die dort bereits vorhandene Fokussieroptik 4 entsprechend angepasst.

Die durch die erfindungsgemäße optische Einrichtung 1 erzeugte Fokusgeometrie 2 umfasst somit einen Hauptlaserspot HS, der vorzugsweise im Schnittpunkt der Bearbeitungsebene BE und der Vorschubachse VA, die zugleich die Hauptstrahlachse der optischen Einrichtung 1 bildet, zuliegen kommt, und zumindest einen, vorzugsweise einen ersten und zweiten Nebenlaserspot NS1, NS2, die jeweils einen Abstand d zur Vorschubachse VA aufweisen. Bei der in den Figuren 1 und 2 dargestellten und zugleich bevorzugten Ausführungsvariante weisen der erste und zweite Nebenlaserspot NS1, NS2 in der Bearbeitungsebene BE jeweils denselben Abstand d zur Vorschubachse VA auf, d.h. sind symmetrisch zu einer die Bearbeitungsebene BE schneidenden und die Vorschubachse VA aufnehmenden Symmetrieebene angeordnet.

Der Hauptlaserspot HS ist vorzugsweise quadratisch oder rechteckförmig ausgebildet, wobei der zumindest eine Nebenlaserspot NS1, NS2 kreisförmig, quadratisch oder rechteckförmig ist. Vorzugsweise ist jedoch die Querschnittsform bzw. Kontur des Hauptlaserspots HS und der Nebenlaserspots NS1, NS2 unterschiedlich zueinander ausgebildet.

Ferner ist die Verteilung der Laserleistung des Laserstrahles LS in den Hauptlaserspot HS und den zumindest einem Nebenlaserspot NS1, NS2 durch Verschieben des strahlformenden Optikmoduls 3 entlang der Vertikalachse y sowie die Verteilung der Laserleistung des ersten und zweiten Nebenlaserspots NS1, NS2 durch Verschieben des strahlformenden Optikmoduls 3 entlang der Querachse x einstellbar.

Das strahlformende Optikmodul 3 weist in der Erfindung zumindest ein erstes Zylinderlinsenarray 5 sowie ein zweites Zylinderlinsenarray 6 auf, die jeweils eine Vielzahl von länglichen Zylinderlinsen aufweisen. Die Zylinderlinsen eines Zylinderlinsenarrays 5, 6 sind hierbei in an sich bekannter Weise in einer Ebene parallel zueinander angeordnet. Das erste und zweite Zylinderlinsenarray 5, 6 des strahlformenden Optikmoduls 3 sind hintereinander entlang des Strahlungsganges bzw. der Propagationsachse z beabstandet zueinander angeordnet, wobei die Zylinderlinsenarrays 5, 6 gekreuzt zueinander sind, d.h. die Längsachsen der Zylinderlinsen des ersten Zylinderlinsenarrays 5 erstrecken sich entlang der Vertikalachse y und die Längsachsen der Zylinderlinsen des zweiten Zylinderlinsenarrays 6 entlang der Querachse x. Hierbei sind die Längen der jeweiligen Zylinderlinsen des ersten und zweiten Zylinderlinsenarrays 5, 6 derart aneinander angepasst, dass sich ein deckungsgleicher Abbildungsraum ergibt. Die zueinander gekreuzten Zylinderlinsenarray 5, 6 sind zur Erzeugung der Hauptlaserstrahlung HLS ausgebildet.

Ferner weist das strahlformende Optikmodul 3 gemäß der in den Figuren 1 und 2 dargestellten Ausführungsvariante eine zwischen dem ersten und zweiten Zylinderlinsenarray 5, 6 aufgenommene Keilplattenanordnung 7 auf, die zur Erzeugung des zumindest einen, vorzugsweise des ersten und zweiten Nebenlaserstrahlung NLS1, NLS2 ausgebildet ist.

Die Keilplattenanordnung 7 umfasst beispielsweise einen ersten und zweiten Keilplattenabschnitt 7.1, 7.2, die entlang der Querrichtung x aneinander anschließen. Der erste und zweite Keilplattenabschnitt 7.1, 7.2 weisen jeweils einen ersten Keilwinkel w1 entlang der Querachse x und einen zweiten Keilwinkel w2 entlang der Vertikalachse y auf. Hierbei bestimmt der Betrag des ersten Keilwinkels w1 entlang der Querachse x den Abstand d der Nebenlaserspots NS1, NS2 von der Vorschubachse VA und der Betrag des zweiten Keilwinkels w2 entlang der Vertikalachse y den Vor- bzw. Nachlauf der Nebenlaserspots NS1, NS2.

Das erste und zweite Zylinderlinsenarray 5, 6 sowie die Keilplattenanordnung 7 bilden ein Modul aus und sind hierzu beispielsweise mechanisch miteinander verbunden, wobei das Modul entlang der Quer- und Vertikalachse x, y verstellbar innerhalb der erfindungsgemäßen Strahlumformeinrichtung 1 gelagert sind, um die eingangs beschriebene Einstellung der Verteilung der Laserleistung des Laserstrahls LS in die Haupt- und Nebenlaserstrahlung HLS, NLS1, NLS2 zu ermöglichen.

Die erfindungsgemäße optische Einrichtung 1 bzw. die Fokussieroptik 4 weist einen Arbeitsabstand AB zur Bearbeitungsebene BE auf. Durch eine entsprechende Änderung des Arbeitsabstandes AB kann der Abstand d der Nebenlaserspots NS1, NS2 zur Vorschubachse VA bzw. der Abstand d' der Nebenlaserspots NS1, NS2 in der Bearbeitungsebene BE zueinander angepasst werden.

In Figur 2 ist beispielhaft die Auswirkung einer Verringerung des Arbeitsabstandes AB in negativer Längsrichtung -z und einer Vergrößerung des Arbeitsabstandes AB in positiver Längsrichtung +z auf den Abstand d' der Nebenlaserspots NS1, NS2 in der Bearbeitungsebene BE anhand einer schematischen Abbildung der dadurch entstehenden Fokusgeometrien 2, 2', 2" dargestellt, und zwar nimmt der Abstand d' der Nebenlaserspots NS1, NS2 bei einer Verringerung des Arbeitsabstandes -z ab und bei einer Vergrößerung des Arbeitsabstandes +z zu.

Es versteht sich, dass die eingangs beschriebene Ausgestaltung der optischen Komponenten der erfindungsgemäßen optischen Einrichtung 1 und der durch diese erzeugten Fokusgeometrien 2, 2', 2" nur beispielhaft gewählt sind und eine Vielzahl hierzu unterschiedlicher Fokusgeometrien mit denselben oder unterschiedlichen optischen Komponenten erzeugbar sind, ohne dass hierdurch der Erfindungsgedanke verlassen wird. Damit ist eine einfache und spezielle Anpassung an die jeweiligen Anforderungen des Bearbeitungsprozesses, insbesondere Schweiß- oder Lötprozesses problemlos möglich.

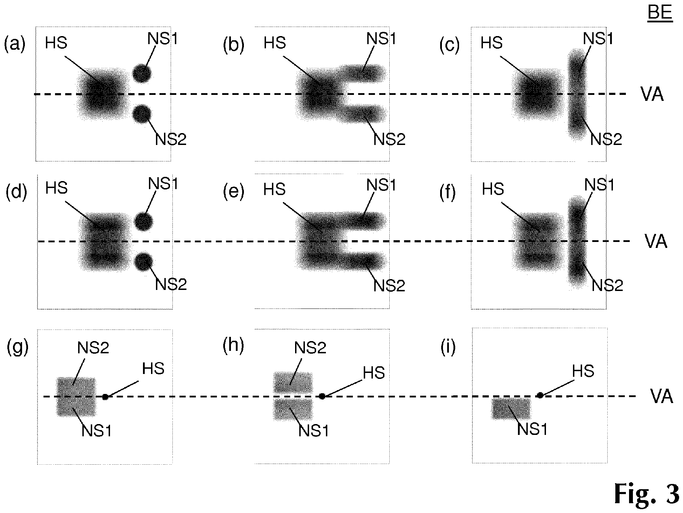

In den Figuren 3a - 3i sind beispielhaft unterschiedliche Fokusgeometrien beispielhaft dargestellt, die mittels der erfindungsgemäßen optischen Einrichtung 1 erzeugbar sind.

Figur 3a zeigt beispielsweise einen quadratischen Hauptlaserspot HS und einen ersten und zweiten kreisförmigen Nebenlaserspot NS1, NS2. Unterschiedlich hierzu sind in Figur 3b der erste und zweite Nebenlaserspot NS1, NS2 rechteckförmig bzw. linienförmig ausgebildet, wobei sich diese entlang der Vorschubachse VA erstrecken und freiendseitig mit dem quadratischen Hauptlaserspot HS zumindest teilweise überlappen. Die dadurch erzeugte Fokusgeometrie ist näherungsweise U- oder C-förmig ausgebildet.

Figur 3c zeigt eine Ausführungsvariante mit einem quadratischen Hauptlaserspot HS und einem ersten und zweiten linienförmigen Nebenlaserspot NS1, NS2, die sich senkrecht zur Vorschubachse VA in der Bearbeitungsebene BE erstrecken, wobei diese zumindest freiendseitig zumindest teilweise überlappen.

Figur 3d zeigt eine rechteckigen Hauptlaserspot HS mit Randüberhöhung und einen ersten und zweiten kreisförmigen Nebenlaserspot NS1, NS2. Die Randüberhöhung stellt beispielsweise eine an den Bearbeitungsprozess angepasste Leistungsdichteverteilung dar.

Figur3e zeigt eine Fokusgeometrie, die einen rechteckigen Hauptlaserspot HS und einen erste und zweiten linienförmigen Nebenlaserspot NS1, NS2 aufweist, wobei sich die linienförmigen Nebenlaserspot NS1, NS2 entlang der Vorschubachse VA erstrecken und in den rechteckförmigen Hauptlaserspot HS übergehen.

Figur 3f zeigt eine Ausführungsvariante mit einem rechteckförmigen Hauptlaserspot HS mit Randüberhöhung und einem ersten und zweiten linienförmigen Nebenlaserspot NS1, NS2, die sich senkrecht zur Vorschubachse VA in der Bearbeitungsebene BE erstrecken, wobei diese zumindest freiendseitig zumindest teilweise überlappen.

Figur 3g zeigt eine Fokusgeometrie umfassend einen punktförmigen Hauptlaserspot HS und zwei quadratischen Nebenlaserspots NS1, NS2, die sich zu einem Quadrat ergänzen, welches dem punktförmigen Hauptlaserspot HS im Gegensatz zu den Ausführungsbeispielen gemäß Figur 3a - 3f nachläuft.

Bei der Ausführungsvariante gemäß Figur 3h sind zwei rechteckige Nebenlaserspots NS1, NS2 beanstandet zueinander angeordnet.

Bei der Ausführungsvariante gemäß Figur 3i ist unterschiedlich zur Ausführungsvariante gemäß Figur 3h ein Nebenlaserspot NS1 vorgesehen.

Insbesondere beim Laserschneiden oder -schweißen kann durch die Wahl der Abmessungen der Nebenlaserspots NS1, NS2 und die von diesen bereitgestellten Laserleistung die resultierende Härte in der Wärmeeinflusszone eingestellt werden.

Durch eine entsprechende Wahl der Brennweite der Fokussieroptik 4 kann die Abmessung der Fokusgeometrie, insbesondere des Hauptlaserspots HS und der Nebenlaserspots NS1, NS2 ebenfalls eingestellt werden.

### Bezugszeichenliste

- 1: optische Einrichtung
- 2, 2', 2": Fokusgeometrie
- 3: strahlformendes Optikmodul
- 4: Fokussieroptik
- 5: erstes Zylinderlinsenarray
- 6: zweites Zylinderlinsenarray
- 7: Keilplattenanordnung
- 7.1: erster Keilplattenabschnitt
- 7.2: zweite Keilplattenabschnitt

- LS: Laserstrahlung
- HLS: Hauptlaserstrahlung
- NLS1: erste Nebenlaserstrahlung
- NLS2: zweite Nebenlaserstrahlung
- HS: Hauptlaserspot
- NS1: erster Nebenlaserspot
- NS2: zweiter Nebenlaserspot
- d: Abstand
- d': Abstand
- AB: Arbeitsabstand
- VA: Vorschubachse
- w1: erster Keilwinkel
- w2: zweiter Keilwinkel

## Patentansprüche

1. Optische Einrichtung zum Umformen einer entlang einer Propagationsachse (z) propagierenden Laserstrahlung (LS) umfassend zumindest ein strahlformendes Optikmodul (3), **dadurch gekennzeichnet, dass** das strahlformende Optikmodul (3) zur Erzeugung einer Fokusgeometrie in einer Bearbeitungsebene (BE) mit einem Hauptlaserspot (HS) und zumindest einem Nebenlaserspot (NS1, NS2) ausgebildet ist, wobei das strahlformende Optikmodul (3) nach einer Kollimationslinse einer Bearbeitungsoptik eingesetzt wird,
dass der Hauptlaserspot (HS) eine quadratische oder rechteckige Form aufweist und der zumindest eine Nebenlaserspot (NS1, NS2) kreisförmig, quadratisch oder rechteckförmig ausgebildet ist,
dass das strahlformende Optikmodul (3) zumindest ein erstes Zylinderlinsenarray (5) sowie ein zweites Zylinderlinsenarray (6) und eine Keilplattenanordnung (7) aufweist, wobei das erste und zweite Zylinderlinsenarray (5, 6) und die Keilplattenanordnung (7) zur Ausbildung des Moduls (3) mechanisch miteinander verbunden sind und das Modul (3) entlang einer senkrecht zur Propagationsachse (z) verlaufenden Quer- und Vertikalachse (x, y) verstellbar in der optischen Einrichtung (1) gelagert ist,
dass das erste und zweite Zylinderlinsenarray (5, 6) jeweils eine Vielzahl von in einer Ebene parallel zueinander angeordnete, längliche Zylinderlinsen aufweist,
dass das erste und zweite Zylinderlinsenarray (5, 6) hintereinander entlang der Propagationsachse (z), beabstandet und gekreuzt zueinander angeordnet sind, wobei die zueinander gekreuzten Zylinderlinsenarrays (5, 6) zur Erzeugung der Hauptlaserstrahlung (HLS) ausgebildet sind,
dass die Keilplattenanordnung (7) zwischen dem ersten und zweiten Zylinderlinsenarray (5, 6) aufgenommen und zur Erzeugung der zumindest einen Nebenlaserstrahlung (NLS1, NLS2) ausgebildet ist,
wobei dem strahlformenden Optikmodul (3) in Richtung der Propagationsachse (z) eine Fokussieroptik (4) nachgeordnet ist, die zur Abbildung der Hauptlaserstrahlung (HLS) in den Hauptlaserspot (HS) und der zumindest einen Nebenlaserstrahlung (NLS1, NLS2) in den zumindest einen Nebenlaserspot (NS1, NS2) in der Bearbeitungsebene (BE) ausgebildet ist.

2. Optische Einrichtung nach Anspruch 1, **dadurch gekennzeichnet, dass** die Keilplattenanordnung (7) zur Erzeugung einer ersten und zweiten Nebenlaserstrahlung (NLS1, NLS2) ausgebildet ist.

3. Optische Einrichtung nach Anspruch 1 oder 2, **dadurch gekennzeichnet, dass** die optische Einrichtung (1) zur Verwendung in einem Materialbearbeitungsprozess vorgesehen ist und der Hauptlaserspot (HS) eine an den Materialbearbeitungsprozess angepasste Leistungsdichteverteilung aufweist.

4. Optische Einrichtung nach Anspruch 2, **dadurch gekennzeichnet, dass** die Fokussieroptik (4) zur Abbildung der ersten und zweiten Nebenlaserstrahlung (NSL1, NLS2) in einen ersten und zweiten Nebenlaserspot (NS1, NS2) ausgebildet ist.

5. Optische Einrichtung nach einem der Ansprüche 2 oder 4, **dadurch gekennzeichnet, dass** mittels des strahlformenden Optikmoduls (3) die Leistung der Laserstrahlung (LS) auf den Hauptlaserspot (HS) und den zumindest einen Nebenlaserspot (NS1, NS2) durch Verschieben des strahlformenden Optikmoduls (3) entlang der senkrecht zur Propagationsachse (z) verlaufenden Vertikalachse (y) variabel aufteilbar ist.

6. Optische Einrichtung nach einem der Ansprüche 2, 4 oder 5, **dadurch gekennzeichnet, dass** zumindest ein erster und zweiter Nebenlaserspot (NS1, NS2) vorgesehen sind und mittels des strahlformenden Optikmoduls (3) die Leistungsaufteilung zwischen dem ersten und zweiten Nebenlaserspot (NS1, NS2) durch Verschieben des strahlformenden Optikmoduls (3) entlang einer senkrecht zur Propagationsachse (z) verlaufenden Querachse (x) variabel einstellbar ist.

7. Optische Einrichtung nach einem der vorhergehenden Ansprüche, **dadurch gekennzeichnet, dass** der zumindest eine Nebenlaserspot (NS1, NS2) bezogen auf eine in der Bearbeitungsebene (BE) verlaufenden Vorschubachse (VA) vor- oder nachlaufend versetzt zum Hauptlaserspot (HS) angeordnet ist.

8. Optische Einrichtung nach Anspruch 7, **dadurch gekennzeichnet, dass** der Hauptlaserspot (HS) auf der Vorschubachse (VA) und der zumindest eine Nebenlaserspot (NS1, NS2) seitlich versetzt zur Vorschubachse (VA) in der Bearbeitungsebene (BE) angeordnet sind.

9. Optische Einrichtung nach Anspruch 7 oder 8, **dadurch gekennzeichnet, dass** der zumindest eine Nebenlaserspot (NS1, NS2) in der Bearbeitungsebene (BE) einen Abstand (d) zur Vorschubachse (VA), eine zur Fokussierung der Laserstrahlung (LS) eingesetzte Fokussieroptik (4) einen Arbeitsabstand (AB) zur Bearbeitungsebene (BE) und eine Kollimationsoptik einen Kollimationsabstand (KA) zum Faserende aufweist, wobei der Abstand (d) durch Änderung des Arbeitsabstandes (AB) und/oder des Kollimationsabstandes (KA) einstellbar ist.

## Claims

1. An optical device for shaping laser radiation (LS) propagating along a propagation axis (z), comprising at least one beam-shaping optical module (3), **characterized**
**in that** the beam-shaping optical module (3) is constructed for generating a focus geometry in a processing plane (BE) with a main laser spot (HS) and at least one ancillary laser spot (NS1, NS2), wherein the beam-shaping optical module (3) is used downstream of a collimation lens of a processing optical element,
**in that** the main laser spot (HS) has a square or rectangular shape and the at least one ancillary laser spot (NS1, NS2) is configured in a circular, square or rectangular manner,
**in that** the beam-shaping optical module (3) comprises at least a first cylindrical lens array (5) and a second cylindrical lens array (6) and a wedge-plate arrangement (7), wherein the first and second cylindrical lens array (5, 6) and the wedge-plate arrangement (7) are mechanically connected to one another to form the module (3) and the module (3) is mounted in the optical device (1) in a displaceable manner along a transverse and vertical axis (x, y) running perpendicular to the propagation axis (z), in that the first and second cylindrical lens arrays (5, 6) in each case have a multiplicity of longitudinal cylindrical lenses arranged in a plane parallel to one another,
**in that** the first and second cylindrical lens arrays (5, 6) are arranged one after the other along the propagation axis (z), spaced and crosswise with respect to one another, wherein the cylindrical lens arrays (5, 6), which are crosswise with respect to one another, are constructed for generating the main laser radiation (HLS),
**in that** the wedge-plate arrangement (7) is accommodated between the first and second cylindrical lens arrays (5, 6) and constructed for generating the at least one ancillary laser radiation (NLS1, NLS2),
wherein a focussing optical element (4) is arranged behind the beam-shaping optical module (3) in the direction of the propagation axis (z), which is constructed for imaging the main laser radiation (HLS) into the main laser spot (HS) and the at least one ancillary laser radiation (NLS1, NLS2) into the at least one ancillary laser spot (NS1, NS2) in the processing plane (BE).

2. Optical device according to claim 1, **characterized in that** the wedge-plate arrangement (7) is constructed for generating a first and second ancillary laser radiation (NLS1, NLS2).

3. Optical device according to claim 1 or 2, **characterized in that** the optical device (1) is provided for use in a material machining process and the main laser spot (HS) has a power density distribution adapted to the material machining process.

4. Optical device according to claim 2, **characterized in that** the focussing optical element (4) is constructed for imaging the first and second ancillary laser radiation (NLS1, NLS2) into a first and second ancillary laser spot (NS1, NS2).

5. Optical device according to one of claims 2 or 4, **characterized in that** the power of the laser radiation (LS) can be divided in a variable manner by means of the beam-shaping optical module (3) to the main laser spot (HS) and the at least one ancillary laser spot (NS1, NS2) by displacing the beam-shaping optical module (3) along the vertical axis (y) running perpendicular to the propagation axis (z).

6. Optical device according to one of claims 2, 4 or 5, **characterized in that** at least a first and second ancillary laser spot (NS1, NS2) are provided and the power division between the first and second ancillary laser spots (NS1, NS2) can be set in a variable manner by means of the beam-shaping optical module (3) by displacing the beam-shaping optical module (3) along a transverse axis (x) running perpendicular to the propagation axis (z).

7. Optical device according to one of the preceding claims, **characterized in that** the at least one ancillary laser spot (NS1, NS2) is arranged with a leading or trailing offset in relation to the main laser spot (HS) with respect to a feed axis (VA) running in the processing plane (BE).

8. Optical device according to claim 7, **characterized in that** the main laser spot (HS) is arranged on the feed axis (VA) and the at least one ancillary laser spot (NS1, NS2) is arranged laterally offset to the feed axis (VA) in the processing plane (BE).

9. Optical device according to claim 7 or 8, **characterized in that** the at least one ancillary laser spot (NS1, NS2) in the processing plane (BE) has a distance (d) from the feed axis (VA), a focussing optical element (4) used for focussing the laser radiation (LS) has a working distance (AB) from the processing plane (BE) and a collimation optical element has a collimation distance (KA) from the fibre end, wherein the distance (d) can be set by changing the working distance (AB) and/or the collimation distance (KA).

## Revendications

1. Dispositif optique destiné à déformer un rayonnement laser (LS) se propageant le long d'un axe de propagation (z), comprenant au moins un module optique (3) de formation de faisceau, **caractérisé en ce que** le module optique (3) de formation de faisceau est réalisé pour générer une géométrie focale dans un plan d'usinage (BE) avec un point laser principal (HS) et au moins un point laser secondaire (NS1, NS2), dans lequel le module optique (3) de formation de faisceau est inséré après une lentille collimatrice d'une optique d'usinage,
**en ce que** le point laser principal (HS) possède une forme carrée ou rectangulaire et l'au moins un point laser secondaire (NS1, NS2) est réalisé en forme circulaire, carrée ou rectangulaire,
**en ce que** le module optique (3) de formation de faisceau comporte au moins un premier réseau de lentilles cylindriques (5) ainsi qu'un deuxième réseau de lentilles cylindriques (6) et un ensemble de plaques de coin (7), dans lequel le premier et le deuxième réseau de lentilles cylindriques (5, 6) et l'ensemble de plaques de coin (7) sont reliés mécaniquement l'un à l'autre afin de réaliser le module (3) et le module (3) est monté dans le dispositif optique de manière réglable le long d'un axe transversal et d'un axe vertical (x, y), lesquels sont perpendiculaires à l'axe de propagation (z),
**en ce que** le premier et le deuxième réseau de lentilles cylindriques (5, 6) comportent respectivement une pluralité de lentilles cylindriques allongées, agencées parallèlement l'une à l'autre dans un plan,
**en ce que** le premier et le deuxième réseau de lentilles cylindriques (5, 6) sont disposés l'un derrière l'autre le long de l'axe de propagation (z), espacés et entrecroisés, dans lequel les réseaux entrecroisés de lentilles cylindriques (5, 6) sont réalisés pour générer le rayonnement laser principal (HLS), **en ce que** l'ensemble de plaques de coin (7) est logé entre le premier et le deuxième réseau de lentilles cylindriques (5, 6) et est réalisé pour générer l'au moins un rayonnement laser secondaire (NLS1, NLS2),
dans lequel une optique de focalisation (4) est monté en aval du module optique (3) de formation de faisceau dans la direction de l'axe de propagation (z), laquelle est réalisée pour la projection du rayonnement laser principal (HLS) dans le point laser principal (HS) et de l'au moins un rayonnement laser secondaire (NLS1, NLS2) dans l'au moins un point laser secondaire (NS1, NS2) dans le plan d'usinage (BE).

2. Dispositif optique selon la revendication 1, **caractérisé en ce que** l'ensemble de plaques de coin (7) est réalisé pour générer un premier et un deuxième rayonnement laser secondaire (NLS1, NLS2).

3. Dispositif optique selon la revendication 1 ou 2, **caractérisé en ce que** le dispositif optique (1) est prévu pour l'utilisation dans un procédé d'usinage de matériau et le point laser principal (HS) présente une distribution de densités de puissance adaptée au procédé d'usinage de matériau.

4. Dispositif optique selon la revendication 2, **caractérisé en ce que** l'optique de focalisation (4) est réalisée pour la projection du premier et du deuxième rayonnement laser secondaire (NSL1, NLS2) dans un premier et un deuxième point laser secondaire (NS1, NS2).

5. Dispositif optique selon l'une des revendications 2 ou 4, **caractérisé en ce que** la puissance du rayonnement laser (LS) peut être répartie au moyen du module optique (3) de formation de faisceau de façon variable sur le point laser principal (HS) et l'au moins un point laser secondaire (NS1, NS2) par coulissement du module optique (3) de formation de faisceau le long de l'axe vertical (y) s'étendant perpendiculairement à l'axe de propagation (z).

6. Dispositif optique selon l'une des revendications 2, 4 ou 5, **caractérisé en ce qu'**au moins un premier et deuxième point laser secondaire (NS1, NS2) sont prévus et la répartition de puissance entre le premier et le deuxième point laser secondaire (NS1, NS2) est réglable au moyen du module optique (3) de formation de faisceau de façon variable par coulissement du module optique (3) de formation de faisceau le long de l'axe transversal (x) s'étendant perpendiculairement à l'axe de propagation (z).

7. Dispositif optique selon l'une des revendications précédentes, **caractérisé en ce que** l'au moins un point laser secondaire (NS1, NS2) est disposé en décalage, en amont ou en aval du point laser principal (HS), par rapport à un axe d'avancement (VA) s'étendant dans le plan d'usinage (BE).

8. Dispositif optique selon la revendication 7, **caractérisé en ce que** le point laser principal (HS) est disposé sur l'axe d'avancement (VA) et l'au moins un point laser secondaire (NS1, NS2) est disposé en décalage latéral par rapport à l'axe d'avancement (VA) dans le plan d'usinage (BE).

9. Dispositif optique selon la revendication 7 ou 8, **caractérisé en ce que** l'au moins un point laser secondaire (NS1, NS2) dans le plan d'usinage (BE) présente une distance (d) par rapport à l'axe d'avancement (VA), une optique de focalisation (4) insérée afin de focaliser le rayonnement laser (LS) présente une distance de travail (AB) par rapport au plan d'usinage (BE) et une optique collimatrice présente une distance de collimation (KA) par rapport à l'extrémité de la fibre, dans lequel la distance (d) est réglable par modification de la distance de travail (AB) et/ou de la distance de collimation (KA).
